(19) 

Europäisches
Patentamt

European
Patent Office

Office européen
des brevets

(11) **EP 3 604 426 A1**

(12) **EUROPEAN PATENT APPLICATION**
published in accordance with Art. 153(4) EPC

(43) Date of publication:
**05.02.2020 Bulletin 2020/06**

(21) Application number: **18774682.1**

(22) Date of filing: **08.03.2018**

(51) Int Cl.:
*C08L 23/36* [(2006.01)]   *C08F 8/30* [(2006.01)]
*C08K 7/06* [(2006.01)]   *C08L 23/02* [(2006.01)]

(86) International application number:
**PCT/JP2018/008948**

(87) International publication number:
**WO 2018/180332 (04.10.2018 Gazette 2018/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2017   JP 2017067882**

(71) Applicant: **Mitsui Chemicals, Inc.
Minato-ku
Tokyo 105-7122 (JP)**

(72) Inventors:
• **SHIGA Ryohei
  Ichihara-shi
  Chiba 299-0108 (JP)**
• **SAKUMA Takashi
  Ichihara-shi
  Chiba 299-0108 (JP)**
• **YASUI Shigeyuki
  Sodegaura-shi
  Chiba 299-0265 (JP)**

(74) Representative: **Hoffmann Eitle
Patent- und Rechtsanwälte PartmbB
Arabellastraße 30
81925 München (DE)**

(54) **FILLER-REINFORCED RESIN STRUCTURE**

(57)    The present invention relates to a filler-reinforced resin structure, and the structure is a structure containing a carbodiimide-modified polyolefin (A) having a carbodiimide group content of 1 to 200 mmol/100 g; or a structure containing a carbodiimide-modified polyolefin (A) having a carbodiimide group content of 1 to 200 mmol/100 g, a polypropylene resin, and a carbon fiber, and the structure containing 0.0001 to 140 mmol of the carbodiimide group based on 100 g of resin components in the structure.

**EP 3 604 426 A1**

**Description**

Technical Field

The present invention relates to a novel filler-reinforced resin structure.

Background Art

Polyolefins such as polypropylene and polyethylene are molded by various methods and provided for uses in many fields.

Polyolefins, polypropylene in particular, may have insufficient heat resistance, rigidity, and strength depending on the use and are reinforced in this case by a filler, such as talc or a glass fiber. However, the reinforcing effect of the filler is not sufficient in many cases, for example, because of insufficient dispersion of the filler, low adhesiveness between the filler and polypropylene.

To solve this problem, various silane coupling agents or titanate coupling agents are added in performing melt-compounding, or the surface of a filler is treated, for example, with a higher fatty acid in some cases; however, it cannot be said that the effect is sufficient.

In addition, attempts to improve the reinforcing effect by dispersing a carbon fiber at a higher level have been made.

For example, Patent Literature 1 discloses a carbon fiber resin composition obtained by treating a sizing agent-treated carbon fiber with a maleic anhydride-modified polypropylene. However, even though the affinity between propylene and the carbon fiber has been improved in the composition, the strength of a molded body obtained from the composition has been insufficient as before.

As a measure for improving this, using a composition containing an amino group- or epoxy group-modified polyolefin resin in place of the maleic anhydride-modified polypropylene has been attempted (example: Patent Literature 2), but the composition is still insufficient in terms of practical strength.

On the other hand, carbodiimide group-containing compounds are known as modifiers for polyolefins. Specifically, a carbodiimide group-containing compound is used as a compatibilizer for a polar group-containing polymer and an olefin polymer in Patent Literature 3, and a carbodiimide group-containing compound is used as a compatibilizer for a filler and an olefin polymer in Patent Literature 4.

Citation List

Patent Literature

Patent Literature 1: JP-A-2003-277525
Patent Literature 2: JP-A-2005-213479
Patent Literature 3: WO 2005/097840
Patent Literature 4: WO 2009/069649

Summary of Invention

Technical Problem

In Patent Literature 4, it is disclosed that a molded article having excellent mechanical properties such as impact resistance and bending strength is obtained, but durability, such as tensile fatigue and bending creep, which is required, for example, in automobile parts and home electric appliance parts is not disclosed at all.

One embodiment according to the present invention provides a filler-reinforced resin structure having excellent tensile fatigue and bending creep.

Solution to Problem

The present inventors have conducted diligent studies to find that the above-described problem can be solved according to the following constitution examples and have thereby completed the present invention.

That is, one embodiment of the present invention relates to
a filler-reinforced resin structure containing a carbodiimide-modified polyolefin (A) having a carbodiimide group content of 1 to 200 mmol/100 g, or
a filler-reinforced resin structure containing: a carbodiimide-modified polyolefin (A) having a carbodiimide group content of 1 to 200 mmol/100 g; a polypropylene resin; and a carbon fiber, the structure containing 0.0001 to 140 mmol of the carbodiimide group based on 100 g of resin components in the structure.

These filler-reinforced resin structures altogether are also referred to as "the present structure".

Advantageous Effects of Invention

According to one embodiment of the present invention, the reinforcing property and dispersibility of a filler can be improved, and a structure excellent in durability, such as tensile fatigue and bending creep, can be easily obtained.

Accordingly, the structure according to one embodiment of the present invention can be suitably used, for example, for parts such as automobile parts, motorcycle/bicycle parts, housing-related parts, medical devices, robot parts, aircraft parts, home electric appliance parts, electric/electronic parts, machine mechanism parts, power tool parts, food containers, sporting goods, and building material-related parts, in which durability, such as tensile fatigue and bending creep in particular, is required.

Description of Embodiments

<<Filler-Reinforced Resin Structure>>

A filler-reinforced resin structure according to one embodiment of the present invention contains a carbodiimide-modified polyolefin (A) having a carbodiimide group content of 1 to 200 mmol/100 g.

The present structure preferably further contains, for example, an unmodified polyolefin (B), and a filler (C).

When the present structure contains an unmodified polyolefin (B) and a filler (C), the content of the carbodiimide-modified polyolefin (A) is preferably 0.01 to 50 parts by weight, more preferably 0.05 to 30 parts by weight, and particularly preferably 0.1 to 20 parts by weight, the content of the unmodified polyolefin (B) is preferably 20 to 99 parts by weight, more preferably 30 to 95 parts by weight, and particularly preferably 50 to 90 parts by weight, and the content of the filler (C) is preferably 1 to 80 parts by weight, more preferably 5 to 70 parts by weight, and particularly preferably 10 to 50 parts by weight (provided that the total amount of the polyolefin (B) and the filler (C) is assumed to be 100 parts by weight).

When the contents of the (A) to (C) are in the above-described ranges, the reinforcing property and dispersibility of the filler are thereby improved, so that a filler structure having excellent tensile fatigue and bending creep can be easily obtained.

When the filler (C) is a carbon fiber, when the content of the carbon fiber is less than 1 part by weight, the reinforcing effect of the unmodified polyolefin (B) by the carbon fiber is not exhibited in some cases, and when the content exceeds 80 parts by weight, the toughness of a resultant structure is lost in some cases.

In addition, the present structure is also a structure containing the carbodiimide-modified polyolefin (A), a polypropylene resin, and a carbon fiber, the structure containing 0.0001 to 140 mmol of a carbodiimide group based on 100 g of resin components in the structure.

Such a structure has better tensile fatigue and bending creep.

The carbodiimide group content is preferably 0.0005 to 100 mmol, and more preferably 0.001 to 60 mmol based on 100 g of resin components in the present structure from the viewpoints of, for example, capability of easily obtaining a structure having better tensile fatigue and bending creep.

It is to be noted that the amount of the resin components in the present structure can be measured by dissolving and separating the resin components. In addition, the carbodiimide group content can also be calculated from the amount of the polyolefin (A) used in producing the present structure, the amount of the carbodiimide group in the polyolefin (A), and the amount of the resins.

The tensile fatigue (tensile strength at which breakage occurs by 200000 times of repeated applications of tension) at 23°C, measured by the method described in Examples below, of the present structure is preferably 46 to 100 MPa, and more preferably 50 to 100 MPa, and the tensile fatigue at 80°C is preferably 20 to 80 MPa, and more preferably 30 to 80 MPa.

When the tensile fatigue is in the above-described ranges, a structure having better durability can be thereby obtained, and the structure can be suitably used for various uses, particularly for a front end module of an automobile, an air cleaner part of an automobile, a door part of an automobile, a medical device, and a fork and/or a frame for a robot.

The bending creep at 23°C, measured by the method described in Examples below, of the present structure is preferably 0.1 to 1%, and more preferably 0.1 to 0.9%, and the bending creep at 80°C is preferably 0.5 to 5%, and more preferably 0.5 to 4%.

When the bending creep is in the above-described ranges, a structure having better durability can be thereby obtained, and the structure can be suitably used for various uses, particularly for a front end module of an automobile, an air cleaner part of an automobile, a door part of an automobile, a medical device, and a fork and/or a frame for a robot.

The shape of the present structure is not particularly limited and may be appropriately selected based on the desired use. According to one embodiment of the present invention, structures of various shapes can be easily formed.

The present structure can be used for wide uses from household utensils to industrial products. For example, the present structure is used for automobile parts (examples: front end, fan shroud, cooling fan, engine undercover, engine cover, radiator box, side door, back door inner, back door outer, outside plate, roof rail, door handle, luggage box, wheel cover, handle, cooling module, air cleaner, spoiler, fuel tank, platform, and side member), motorcycle/bicycle parts (examples: luggage box, handle, and wheel), housing-related parts (examples: toilet seat unit with warm-water bidet functions, bathroom parts, chair leg, valves, and meter box), medical devices, robot parts (examples: fork and/or frame for robot), and other parts (examples: aircraft parts, home electric appliance parts, electric/electronic parts, machine mechanism parts, food containers, sporting goods, power tool parts, building material-related parts, mower handles, hose joints, resin bolts, and concrete forms), and examples of the parts in which rigidity and durability in particular are required include automobile parts (front end modules (including fan shroud, fan, and cooling module), air cleaners and door parts), valves, medical devices, forks and/or frames for robots, and IC trays.

<Carbodiimide-Modified Polyolefin (A)>

The carbodiimide-modified polyolefin (A) is a resin having a carbodiimide group content of 1 to 200 mmol/100 g.

The polyolefin (A) acts as an auxiliary agent for a filler-reinforced resin and can improve the reinforcing property and dispersibility of a filler.

One or more carbodiimide-modified polyolefins (A) may be contained in the present structure.

The carbodiimide group content refers to a carbodiimide group content based on 100 g of the carbodiimide-modified polyolefin (A) and is preferably 5 to 150 mmol/100 g, and more preferably 10 to 100 mmol/100 g.

When the carbodiimide group content is in the above-described range, the reinforcing property and dispersibility of a filler can be improved more, and a desired structure can be produced easily and economically.

When the carbodiimide group content is too small, the reinforcing property and dispersibility of a filler cannot be exhibited, and when the carbodiimide group content is too large, the molding processability is lowered, and the effect of improving the reinforcing property and dispersibility of a filler is not enhanced so much, which is not economical.

In the present invention, the carbodiimide group content may be calculated from the amount of the raw material for the polyolefin (A) loaded or may be measured by, for example, $^{13}$C-NMR, IR, or a titration method. The carbodiimide group content can be grasped as a carbodiimide equivalent.

In $^{13}$C-NMR, a peak of the carbodiimide group can be observed at 130 to 142 ppm, and in IR, a peak of the carbodiimide group can be observed at 2130 to 2140 cm$^{-1}$.

The $^{13}$C-NMR measurement can be conducted, for example, in the following manner.

That is, 0.35 g of a sample is dissolved in 2.0 ml of hexachlorobutadiene by heating. After a resultant solution is filtrated through a glass filter (G2), 0.5 ml of deuterated benzene is added to a filtrate, and a resultant solution is charged into an NMR tube having an inner diameter of 10 mm. The $^{13}$C-NMR measurement is conducted at 120°C using GX-500 NMR measurement apparatus manufactured by JEOL Ltd. The cumulative number is set to 10,000 or larger.

The IR measurement can be conducted, for example, in the following manner.

That is, after a sample is hot-pressed at 250°C for 3 minutes to prepare a sheet, an infrared absorption spectrum is measured by a transmission method using the sheet and an infrared spectrophotometer (manufactured by JASCO Corporation, FT-IR 410). As the measurement conditions, the resolution is set to 2 cm$^{-1}$, and the cumulative number is set to 32.

The carbodiimide-modified polyolefin (A) is preferably a resin having excellent fluidity at 190°C or 230°C.

The melt flow rate (MFR) of the carbodiimide-modified polyolefin (A) at 190°C or 230°C and at a load of 2.16 kg is usually 0.01 to 400 g/10 min., preferably 0.1 to 300 g/10 min., and particularly preferably 1 to 200 g/10 min.

It is preferable that the MFR be in the above described range because the carbodiimide-modified polyolefin (A) exhibits better reinforcing property and dispersibility of a filler

The carbodiimide-modified polyolefin (A) is not particularly limited as long as it is a resin obtained by modifying a polyolefin with carbodiimide, but is preferably a reaction product of a polyolefin resin (a1) having a group reactive with a carbodiimide group (hereinafter, also referred to as "reactive olefin resin (a1)") and a carbodiimide group-containing compound (a2).

Specifically, the carbodiimide-modified polyolefin (A) is preferably obtained by, for example, melt-modification in which the reactive olefin resin (a1) and the carbodiimide group-containing compound (a2) are melt-kneaded, but the method of obtaining the carbodiimide-modified polyolefin (A) is not limited to this method.

One or more reactive olefin resins (a1) may be used for the reaction. In addition, one or more carbodiimide group-containing compounds (a2) may also be used for the reaction.

The kneading method in the melt-kneading is not particularly limited, and examples thereof include a method in which the reactive olefin resin (a1) and the carbodiimide group-containing compound (a2) are charged simultaneously or sequentially into, for example, a Henschel mixer, a V-type blender, a tumbler blender, or a ribbon blender to knead a resultant mixture, and a kneaded mixture is then melt-kneaded with, for example, a single screw extruder, a multi-screw extruder, a kneader, or a Banbury mixer.

Among these, it is preferable to use an apparatus having excellent kneading performance, such as a multi-screw extruder, a kneader, or a Banbury mixer, because a resin in which respective components are dispersed and reacted more uniformly can be obtained.

Any one of a method in which the reactive olefin resin (a1) and the carbodiimide group-containing compound (a2) are mixed preliminarily and a resultant mixture is then supplied from a hopper, and a method in which one component is supplied from a hopper and the other component is suppled from a supply port provided at an arbitrary portion between the vicinity of a hopper section and the tip of an extruder can be adopted.

The temperature in the melt-kneading is preferably equal to or higher than the highest melting point among the melting points of respective components to be mixed and is specifically 150 to 300°C, preferably 200 to 280°C, and particularly preferably 230 to 270°C.

The molar ratio of the reactive olefin resin (a1) to the carbodiimide group-containing compound (a2) (moles of resin (a1):moles of compound (a2)) in reacting these is preferably 1:0.2 to 3.2, more preferably 1:0.4 to 2.6, and particularly preferably 1:0.7 to 2.2 from the viewpoints of, for example, obtaining a carbodiimide-modified polyolefin (A) having a high reaction efficiency and better fluidity.

In addition, the amount of the carbodiimide group-containing compound (a2) to be used is preferably an amount such that the carbodiimide group content in the resultant carbodiimide-modified polyolefin (A) is in the above-described range.

It is to be noted that the reaction of a group which is in the reactive olefin resin (a1) and which is reactive with a carbodiimide group and the carbodiimide group in the carbodiimide group-containing compound (a2) is preferably controlled, and the degree of the progress of the reaction can be checked, for example, by calculating the reaction rate through the following method.

After a hot-pressed sheet is prepared from the reactive olefin resin (a1) and from the reaction product of the reactive olefin resin (a1) and the carbodiimide group-containing compound (a2), the infrared absorption is measured for respective sheets using an infrared absorption analyzer.

The reaction rate can be calculated from the obtained charts by comparing the absorbance of the absorption band (1790 cm$^{-1}$, when maleic anhydride is used) attributable to the peak intensity of the group reactive with a carbodiimide group before and after the reaction and using the following expression.

$$\text{Reaction rate (\%) = X/Y} \times 100$$

[X: difference in absorbance of group reactive with carbodiimide group (before reaction - after reaction), Y: absorbance of group reactive with carbodiimide group before reaction]

The reaction rate determined by the above-described method is preferably 40 to 100%, more preferably 60 to 100%, and particularly preferably 80 to 100%.

It is considered that a certain extent of the carbodiimide group is consumed in the process of the reaction of the reactive olefin resin (a1) and the carbodiimide group-containing compound (a2), and the residue of the carbodiimide group which is connected to the polyolefin as the same molecular chain interacts with a filler, so that the carbodiimide-modified polyolefin (A) contributes to the reinforcing property and the dispersibility.

The amount of this carbodiimide residue can be decided from the intensity of the peak attributable to the stretching vibration of the N=C=N group at 2130 to 2140 cm$^{-1}$ in the IR measurement.

The carbodiimide-modified polyolefin (A) may contain an unreacted reactive olefin resin (a1) and may contain an unreacted carbodiimide group-containing compound (a2). Two or more unreacted reactive olefin resins (a1) and unreacted carbodiimide group-containing compounds (a2) may be contained.

In addition, the carbodiimide-modified polyolefin (A) may contain known agents such as process stabilizers, thermal stabilizers, and anti-thermal aging agents in a range that does not impair the object of the present invention.

[Polyolefin Resin (a1) Having Group Reactive with Carbodiimide Group]

The reactive olefin resin (a1) has a group reactive with a carbodiimide group. One or more groups reactive with a carbodiimide group may be contained.

Examples of the group reactive with a carbodiimide group include groups containing active hydrogen having a reactivity with a carbodiimide group, and specific examples thereof include a carboxyl group, an amino group, a hydroxyl group, a thiol group, and groups (examples: acid anhydride groups) derived from these groups.

Besides the groups having active hydrogen, groups that can be easily converted to the group having active hydrogen are preferable, and specific examples thereof include an epoxy group and a glycidyl group.

The MFR of the reactive olefin resin (a1) at a load of 2.16 kg and at 190°C or 230°C in accordance with ASTM D1238 is usually 0.01 to 500 g/10 min., and more preferably 0.05 to 300 g/10 min.

When the MFR is in the above described range, a carbodiimide-modified polyolefin (A) having better effect of improving the reinforcing property and dispersibility of a filler can be easily obtained.

The density of the reactive olefin resin (a1) is usually 0.8 to 1.1 $g/cm^3$, preferably 0.8 to 1.05 $g/cm^3$, and more preferably 0.8 to 1.0 $g/cm^3$.

The number average molecular weight (Mn) of the reactive olefin resin (a1) measured by gel permeation chromatography (GPC) is preferably 5,000 to 500,000, and more preferably 10,000 to 100,000.

When the Mn is in this range, the resin is better in handling.

The reactive olefin resin (a1) can be obtained by reacting a compound (x) having a group reactive with a carbodiimide group (hereinafter, also referred to as "reactive compound (x)") and an olefin or a polyolefin although the production method is not particularly limited.

One or more reactive compounds (x) may be used for the reaction. In addition, one or more olefins or polyolefins may also be used for the reaction.

As a method of reacting the reactive compound (x) and an olefin or polyolefin, well known methods can be adopted, and examples thereof include a method of subjecting the reactive compound (x) to graft copolymerization onto a polyolefin and a method of subjecting an olefin and the reactive compound (x) to radical copolymerization.

The graft copolymerization method is not particularly limited, and examples thereof include a method of subjecting the reactive compound (X) and, if necessary, for example an additional ethylenically unsaturated monomer to graft copolymerization onto the polyolefin to be a main chain of a graft in the presence of a radical initiator.

More specifically, conventionally known graft polymerization methods, such as a solution method and a melt-kneading method, can be adopted.

The method of subjecting an olefin and the reactive compound (x) to copolymerization is not particularly limited, and conventionally known radical copolymerization methods can be adopted.

Compound (x) Having Group Reactive with Carbodiimide Group

Examples of the group which is in the reactive compound (x) and which is reactive with a carbodiimide group include the same groups as given as examples in the section of the reactive olefin resin (a1).

As the reactive compound (x), compounds having a carboxyl group or a group derived from a carboxyl group are suitably used, and among others, unsaturated carboxylic acids and/or derivatives thereof are particularly preferable.

When unsaturated carboxylic acid and/or a derivative thereof is used as the reactive compounds (x), examples thereof include unsaturated compounds having at least one carboxyl group, unsaturated compounds having at least one carboxylic acid anhydride group, and derivatives thereof, and examples of the unsaturated group include a vinyl group, a vinylene group, and unsaturated cyclic hydrocarbon groups.

Specific examples of the unsaturated carboxylic acids and the derivatives thereof include unsaturated carboxylic acids such as acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2,2,1]hept-2-ene-5,6-dicarboxylic acid, acid anhydrides thereof, and derivatives thereof (examples: acid halides, amides, imides, and esters).

Specific examples of the acid anhydrides and derivatives thereof include malenyl chloride, malenyl imide, maleic anhydride, itaconic anhydride, citraconic anhydride, tetrahydrophthalic anhydride, bicyclo[2,2,1]hept-2-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2,2,1]hept-2-ene-5,6-dicarboxylate, hydroxyethyl (meth)acrylate, hydroxypropyl (meth)acrylate, glycidyl (meth)acrylate, aminoethyl methacrylate, and aminopropyl methacrylate.

Among these, maleic anhydride, (meth)acrylic acid, itaconic anhydride, citraconic anhydride, tetrahydrophthalic anhydride, bicyclo[2,2,1]hept-2-ene-5,6-dicarboxylic anhydride, hydroxyethyl (meth)acrylate, glycidyl methacrylate, and aminopropyl methacrylate are preferable.

Further, dicarboxylic acid anhydrides such as maleic anhydride, itaconic anhydride, citraconic anhydride, tetrahydrophthalic anhydride, and bicyclo[2,2,1]hept-2-ene-5,6-dicarboxylic anhydride are particularly preferable.

The amount of the reactive compound (x) to be used in the reaction of the reactive compound (x) and an olefin or polyolefin is usually 0.1 to 10 parts by weight, preferably 0.1 to 3.0 parts by weight, and more preferably 0.1 to 2.0 parts by weight based on 100 parts by weight of the amount of an olefin and polyolefin to be used.

When the amount of the reactive compound (x) used exceeds the above-described range to become excessive, the reactive compound (x) is left excessively, so that the compound (x) reacts with the carbodiimide group-containing compound (a2) to be crosslinked, making the production of the carbodiimide-modified polyolefin (A) difficult in some cases. In addition, when the amount of the reactive compound (x) used falls below the lower limit of the above-described range, the sites where the carbodiimide group-containing compound (a2) and the reactive olefin resin (a1) bond decrease, so that a resultant carbodiimide-modified polyolefin (A) does not exhibit the reinforcing ability and dispersion ability of a filler sufficiently in some cases even though the carbodiimide-modified polyolefin (A) can be produced.

To prevent the crosslink, the Mn of the reactive olefin resin (a1) is preferably low, and the molar ratio of the raw materials (number of moles of reactive compound (x)/number of moles of olefin and polyolefin) for use in the reaction of the reactive compound (x) and the olefin or polyolefin is preferably small.

That is, this means that when a structure derived from the reactive compound (x) exists on a molecular chain of the reactive olefin resin (a1) in a state which is almost equal to a state where the structure exists singly, not in a state where a plurality of the structures exist, the reaction can be performed suppressing, for example, crosslink, or gelation which can occur when the carbodiimide group (N=C=N) of the carbodiimide group-containing compound (a2) reacts with the group reactive with a carbodiimide group.

By controlling the Mn of the reactive olefin resin (a1) and the content of the structure derived from the reactive compound (x) in the resin (a1), lowering of production stability due to the occurrence of the crosslink can be suppressed in the production of the carbodiimide-modified polyolefin (A), and with the carbodiimide-modified polyolefin (A) in which the crosslink is suppressed in this way, a filler can be reinforced sufficiently and dispersed sufficiently.

From those described above, the reactive olefin resin (a1) preferably satisfies the following expression (1).

$$0.1 < Mn/\{(100 - M) \times f/M\} < 6 \quad (1)$$

[f: molecular weight (g/mol) of reactive compound (x) used
M: content (wt%) of structure derived from reactive compound (x) in reactive olefin resin (a1)
Mn: number average molecular weight of reactive olefin resin (a1)]

In addition, from the viewpoint that it is harder for the crosslink to occur and the reactive olefin resin (a1) has better production stability, and other viewpoints, the reactive olefin resin (a1) more preferably satisfies the following expression (2), and particularly preferably satisfies the following expression (3).

$$0.3 < Mn/\{(100 - M) \times f/M\} < 4 \quad (2)$$

$$0.5 < Mn/\{(100 - M) \times f/M\} < 2.5 \quad (3)$$

[f, M, and Mn in these expressions have the same definitions as those in expression (1).]

Olefin and Polyolefin

Examples of the olefin and an olefin to be a raw material for the polyolefin include aliphatic $\alpha$-olefins having 2 to 20 carbon atoms, cyclic olefins, non-conjugated dienes, and aromatic olefins, preferably $\alpha$-olefins having 2 to 10 carbon atoms, and more preferably $\alpha$-olefins having 2 to 8 carbons.

The olefins for use as a raw material for the polyolefin may be used singly, or two or more thereof may be used.

The polyolefin may be a copolymer of an olefin to be a main component and an olefin to be a comonomer. In this case, the amount of the comonomer to be used is usually less than 50 mol%, preferably 40 mol% or less, and more preferably 30 mol% or less.

Further, a comonomer other than the olefin may be used for the polyolefin, and examples of the comonomer include styrene and vinyl acetate.

As the polyolefin, a homopolymer or a copolymer of ethylene, propylene, 1-butene, 4-methyl-1-pentene, 3-methyl-1-butene, 1-hexene, 1-octene, tetracyclododecene, norbornene, and/or styrene can be preferably used.

When the polyolefin is a resin having a large ethylene content, such as linear low density polyethylene, there is a tendency that the crosslink more easily occurs during producing the carbodiimide-modified polyolefin (A) than in the case of resins having a small ethylene content, such as an ethylene-butene copolymer.

Therefore, to produce the carbodiimide-modified polyolefin (A) using a resin having a large ethylene content and suppressing the crosslink, the structure derived from the reactive compound (x) is preferably adjusted so as to exist on the main chain of the graft (polymerized product of the olefin, or the polyolefin) of the reactive olefin resin (a1) in the number that is near the singular number.

In addition, when the polyolefin is a resin the molecular weight of which is liable to be lowered due to thermal decomposition, such as polypropylene, it is hard for the phenomenon of an increase in viscosity due to the crosslink to occur.

Therefore, when a resin that easily undergoes thermal decomposition is used as the main chain of the graft, the carbodiimide-modified polyolefin (A) can be produced without increasing the viscosity in some cases even if a plurality of the structures derived from the reactive compound (x) exist on the molecular chain of the reactive olefin resin (a1) to be the main chain of the graft.

The density of the polyolefin is usually 0.8 to 1.1 g/cm$^3$, preferably 0.8 to 1.05 g/cm$^3$, and more preferably 0.8 to 1.0 g/cm$^3$, and the MFR at 190°C or 230°C and at a load of 2.16 kg in accordance with ASTM D1238 is usually 0.01 to 500 g/10 min., preferably 0.05 to 300 g/10 min., and still more preferably 0.1 to 100 g/10 min.

When the density and the MFR are in these ranges, the density and the MFR of a resultant reactive olefin resin (a1) are about the same, and therefore the resultant reactive olefin resin (a1) is easy to handle.

The degree of crystallinity of the polyolefin is usually 2% or more, preferably 5% or more, and more preferably 10% or more.

When the degree of crystallinity is in this range, a resultant reactive olefin resin (a1) is better in handling.

The Mn of the polyolefin measured by GPC is preferably 5,000 to 500,000, and more preferably 10,000 to 100,000.

When the Mn is in this range, a resultant reactive olefin resin (a1) is better in handling.

It is to be noted that in ethylene polyolefins, the Mn can be determined in terms of polyethylene when the amount of the comonomer is 10 mol% or less or in terms of ethylenepropylene (based on ethylene content of 70 mol%) when the amount of the comonomer is 10 mol% or more.

In addition, in propylene polyolefins, the Mn can be determined in terms of polypropylene when the amount of the comonomer is 10 mol% or less or in terms of propyleneethylene (based on propylene content of 70 mol%) when the amount of the comonomer is 10 mol% or more.

Production of the polyolefin can be performed by any of conventionally known methods, and the polyolefin can be polymerized, for example, using a titanium catalyst, a vanadium catalyst, or a metallocene catalyst.

The polyolefin may be in any form of a resin and an elastomer, both of the isotactic structure and the syndiotactic structure can be used, and the stereoregularity is not particularly limited.

Commercially available resins as served can also be utilized.

[Carbodiimide Group-Containing Compound (a2)]

The carbodiimide group-containing compound (a2) is not particularly limited but is preferably a polycarbodiimide having a repeating unit represented by the following formula (4).

$$-N=C=N-R^1-\qquad(4)$$

[in the formula, R$^1$ represents a divalent organic group.]

The method of synthesizing the polycarbodiimide is not particularly limited, and the polycarbodiimide can be synthesized, for example, by reacting an organic polyisocyanate in the presence of a catalyst that facilitates the carbodiimidization reaction of an isocyanate group.

The Mn of the carbodiimide group-containing compound (a2) in terms of polystyrene determined by GPC is usually 400 to 500,000, preferably 1,000 to 10,000, and particularly preferably 2,000 to 4,000.

It is preferable that the Mn be in this range because a carbodiimide-modified polyolefin (A) having an excellent effect of improving the reinforcing property and dispersibility of a filler can be easily obtained.

The carbodiimide group-containing compound (a2) may contain a monocarbodiimide in the polycarbodiimide.

It is to be noted that commercially available carbodiimide group-containing compounds as they are can also be used as the carbodiimide group-containing compound (a2). Examples of the commercially available carbodiimide group-containing compounds include CARBODILITE HMV-8CA, and CARBODILITE HMV-15CA and LA1 (all manufactured by Nisshinbo Chemical Inc.).

<Unmodified Polyolefin (B)>

The unmodified polyolefin (B) may be appropriately selected based on, for example, the use, the purpose, and/or the type of filler. It is to be noted that "unmodified" means that the polyolefin itself is not modified, and those obtained by blending an additional component in an unmodified polyolefin are referred to as unmodified polyolefins (B).

From the viewpoint that a structure having excellent mechanical strength and having excellent tensile fatigue and bending creep can be easily obtained, and from other viewpoints, the unmodified polyolefin (B) is preferably a polyolefin similar to the polyolefin part in the carbodiimide-modified polyolefin (A), and that is, when the carbodiimide-modified polyolefin (A) is a carbodiimide-modified polypropylene, the unmodified polyolefin (B) is preferably an unmodified polypropylene.

One or more unmodified polyolefins (B) can be contained in the present structure.

Examples of the unmodified polyolefin (B) include the resins which are the same as the polyolefins that can be used as raw materials for the reactive olefin resin (a1).

Specific examples of the unmodified polyolefin (B) include low density polyethylene, high density polyethylene, linear low density polyethylene, polypropylene, ethylenepropylene copolymers, ethylene-butene copolymers, ethylene-hexene copolymers, ethylene-octene copolymers, ethylene-polar group-containing vinyl copolymers, polybutene-1, poly-4-methyl-1-pentene, poly-3-methyl-1-butene, and cyclic polyolefins (examples: ethylene-tetracyclododecene copolymers).

In addition, for example, polymers using ethylenepropylene-nonconjugated diene copolymer rubbers (EPDM) obtained by using a nonconjugated diene, such as 5-ethylidene norbornene, 5-methyl norbornene, 5-vinyl norbornene, dicyclopentadiene, or 1,4-pentadiene, and/or ethylenepropylene-butene terpolymer rubbers as a third component for the polymer can be suitably used.

Among these, in the case of using the present structure at a high temperature near 100°C, when the present structure is used for the use in which the present structure comes into direct contact with a substance, such as gasoline or oil, which swells a polyolefin, it is desirable to use polyolefins, such as polypropylene, high density polyethylene, and linear low density polyethylene, which have a high melting point or have a high degree of crystallinity.

The method for producing the unmodified polyolefin (B) is not particularly limited, the production can be performed by any of conventionally known methods, and the polymerization can be performed, for example, using a titanium catalyst, a vanadium catalyst, or a metallocene catalyst.

The unmodified polyolefin (B) may be in any form of a resin and an elastomer, and both of the isotactic structure and the syndiotactic structure can be used, and the stereoregularity is not particularly limited.

In addition, commercially available resins as they are can also be utilized.

The unmodified polyolefin (B) is preferably a polypropylene resin, and more preferably a propylene homopolymer or propylene/$\alpha$-olefin copolymer and may have any of the steric structures such as the isotactic structure and the syndiotactic structure.

The $\alpha$-olefin content in the propylene/$\alpha$-olefin copolymer is more than 0 mol% to usually 30 mol% or less, preferably 20 mol% or less, and particularly preferably 10 mol% or less.

<Filler (C)>

The filler (C) is not particularly limited and may be an inorganic filler or an organic filler.

One or more fillers (C) may be contained in the present structure.

Examples of the inorganic filler include silica, diatomaceous earth, alumina, titanium oxide, magnesium oxide, pumice powders, pumice balloons, aluminum hydroxide, magnesium hydroxide, basic magnesium carbonate, dolomite, calcium sulfate, calcium titanate, barium sulfate, calcium sulfite, talc, clay, mica, asbestos, glass fibers, glass flakes, glass beads, calcium silicate, montmorillonite, bentonite, boron fibers, carbon fibers, carbon black, carbon nanofibers, aluminum powders, and molybdenum sulfide.

Examples of the inorganic filler further include those obtained by chemically bonding an organic substance to these inorganic fillers.

Examples of the organic filler include fibers such as wholly aromatic polyamide fibers, aliphatic polyamide fibers, polyester fibers, and cellulose fibers, and fine dispersions, for example, of a liquid crystal polyester, or a polyamide.

Examples of the organic filler further include those obtained by subjecting a plant to a decomposition treatment into the form of a fiber or a powder.

As a filler effective for reinforcing the unmodified polyolefin (B), a carbon fiber is preferable.

When the filler (C) is a carbon fiber, there are advantages that a structure which has strength equal to that of carbon fiber-reinforced engineering plastics and which can be made light can be obtained, and the fluidity during molding the structure is good to make the structure suitable for making the thickness thin, and other advantages.

As the carbon fiber, conventionally known various carbon fibers can be used.

Specific examples thereof include polyacrylonitrile carbon fibers, rayon carbon fibers, pitch carbon fibers, polyvinyl alcohol carbon fibers, regenerated cellulose carbon fibers, and pitch carbon fibers produced from meso phase pitch.

The fiber diameter of the carbon fiber is preferably 3 to 30 $\mu$m, and more preferably 4 to 10 $\mu$m.

When the fiber diameter is excessively small, the fiber is easily broken, and therefore productivity of a reinforced fiber bundle is lowered in some cases, and in addition, a large number of fibers have to be bundled in continuously producing a pellet and complicated effort of connecting fiber bundles becomes necessary, and therefore productivity is lowered in some cases.

In the case where the length of a pellet is predetermined, when the fiber diameter is excessively large, the aspect ratio of the fiber is lowered, so that the reinforcing effect of a filler is not exhibited sufficiently in some cases.

The average aspect ratio (fiber length/fiber diameter) of the carbon fiber is usually 5 to 6000, preferably 30 to 3000, and more preferably 100 to 2000.

When the aspect ratio is excessively small, the strength of a resultant structure is lowered in some cases, and when the aspect ratio is too large, there is a risk that the moldability in molding the present structure is lowered.

The aspect ratio of the carbon fiber can be determined from the average fiber diameter and the average fiber length by average fiber length/average fiber diameter.

The carbon fiber may be a long-carbon-fiber. As a raw material for the long-carbon-fiber, a continuous fiber bundle is used.

Usually, the average fiber diameter thereof is 3 to 30 $\mu$m, and the bundling number of filaments is 500 to 24,000. Preferably, the average fiber diameter is 4 to 10 $\mu$m, and the bundling number of filaments is 6,000 to 15,000.

In addition, a chopped strand can also be used as the carbon fiber.

Examples of this chopped strand include those having a length of usually 1 to 20 mm and having a fiber diameter of about 3 to about 30 $\mu$m and preferably 4 to 10 $\mu$m.

As the carbon fiber, fibers which are surface-treated by, for example, oxidation etching, or coating are preferable.

Examples of the oxidation etching include an air oxidation treatment, an oxygen treatment, a treatment with an oxidizing gas, a treatment with ozone, a corona treatment, a flame treatment, a (atmospheric pressure) plasma treatment, and an oxidizing liquid (nitric acid, aqueous solution of alkali metal hypochlorite, potassium dichromate-sulfuric acid, potassium permanganate-sulfuric acid) treatment.

Examples of a substance that covers the carbon fiber include carbon, silicon carbide, silicon dioxide, silicon, a plasma monomer, ferrocene, and iron trichloride.

<Method for Producing Filler-Reinforced Resin Structure>

The method for producing the present structure is not particularly limited as long as the structure containing the carbodiimide-modified polyolefin (A) can be produced.

Preferable examples thereof include a method of molding a filler-reinforced resin composition containing the carbodiimide-modified polyolefin (A), or more preferably, a filler-reinforced resin composition containing: the carbodiimide-modified polyolefin (A); the unmodified polyolefin (B), a polypropylene resin in particular; and the filler (C), a carbon fiber in particular, as it is or after being dry-blended with a diluent.

The filler-reinforced resin composition containing: the carbodiimide-modified polyolefin (A), the unmodified polyolefin (B), a polypropylene resin in particular; and the filler (C), a carbon fiber in particular, can disperse the filler (C) in the unmodified polyolefin (B) much favorably and has excellent adhesiveness at an interface between the unmodified polyolefin (B) and the filler (C), and therefore a structure obtained from the composition has excellent balance of mechanical properties such as impact resistance, rigidity, and heat resistance and has excellent durability, such as tensile fatigue and bending creep.

When the filler-reinforced resin composition contains the carbodiimide-modified polyolefin (A), the unmodified polyolefin (B), and the filler (C), the amounts thereof are preferably such amounts that the contents thereof in a resultant structure fall within the above-described ranges.

One or more carbodiimide-modified polyolefins (A) may be contained in a filler-reinforced resin composition. The same applies to the other components.

In addition, known agents such as softening agents, adhesion imparting agents, anti-aging agents, processing aids, tackifier, thermal stabilizers, weathering stabilizers, anti-static agents, coloring agents, lubricants, flame retardants, and blooming inhibitors can also be added to the filler-reinforced resin composition in a range that does not impair the object of the present invention.

The filler-reinforced resin composition may further contain an additional resin that can be mixed therein in a range that does not impair the object of the present invention.

Examples of the additional resin include vinyl resins, polystyrenes, polyamides, acrylic resins, polyphenylene sulfide resins, polyether ether ketone resins, polyesters, polysulfones, polyphenylene oxides, polyimides, polyether imides, acrylonitrile/butadiene/styrene copolymers (ABS), styrene rubber, phenol resins, melamine resins, polyester resins, silicone resins, and epoxy resins.

Among these, styrene rubber is preferable, and specific examples thereof include styrene/butadiene/styrene-type SBS rubber, styrene/butadiene/butylene/styrene-type SBBS rubber, and styrene/ethylene/butylene/styrene-type SEBS rubber.

When the filler-reinforced resin composition contains two or more components, the composition can be specifically produced by performing melt-kneading, but the production method is not limited to this method.

Examples of the method, and conditions to perform melt-kneading include, for example, the method, and conditions which are the same as those of melt-kneading the reactive olefin resin (a1) and the carbodiimide group-containing compound (a2).

It is to be noted that when the carbodiimide-modified polyolefin (A), the unmodified polyolefin (B), and the filler (C) are melt-kneaded, these may be simultaneously or sequentially added to perform kneading.

With respect to the carbodiimide-modified polyolefin (A) used herein, the carbodiimide-modified polyolefin (A) itself which is obtained by the above-described method may be used, or the auxiliary agent composition described below is formed in advance, and then the auxiliary agent composition may be used.

Examples of other methods for producing the filler-reinforced resin composition include, but not limited to, the methods as follows.

1) A method in which a maleated polypropylene, a polycarbodiimide, a propylene resin, and a filler (C) each in a predetermined amount are dry-blended and kneaded (batch addition method described in JP-A-2005-213478)

2) A method in which a treatment of impregnating a filler (C) with a polycarbodiimide is performed in advance, or a treatment of coating the surface of a filler (C) with a polycarbodiimide is performed in advance, and the obtained filler (C), a propylene resin, and a maleated polypropylene are then kneaded (examples of the method for performing the treatment of impregnating a filler (C) with a polycarbodiimide, or the method for performing the treatment of coating the surface of a filler (C) with a polycarbodiimide include a method in which the surface of the filler (C) is coated with the molten polycarbodiimide, or the filler is immersed in a polycarbodiimide solution to coat the surface of the filler (C))

3) A method in which a treatment of impregnating a filler (C) with a carbodiimide-modified polypropylene is performed in advance, or a treatment of coating the surface of a filler (C) with a carbodiimide-modified polypropylene is performed in advance, and the obtained filler (C) and a propylene resin are then kneaded (examples of the method for performing the treatment of impregnating a filler (C) with a carbodiimide-modified polypropylene, or the method for performing the treatment of coating the surface of a filler (C) with a carbodiimide-modified polypropylene include a method in which the surface of the filler (C) is coated with the molten carbodiimide-modified polypropylene, or the filler (C) is immersed in a polycarbodiimide-modified polypropylene solution obtained by dissolving the carbodiimide-modified polypropylene in a good solvent (example: xylene), thereby coating the surface of the filler)

4) A method in which a composition of PP and a carbodiimide-modified polypropylene is produced in advance, and a filler is coated by a molten product of this composition.

Auxiliary Agent Composition

The auxiliary agent composition can be obtained by reacting, melt-kneading, for example, the reactive olefin resin (a1) and the carbodiimide group-containing compound (a2) in the presence of the unmodified polyolefin (B).

One or more reactive olefin resins (a1) may be contained in the auxiliary agent composition. The same applies to the other components.

Examples of the method, and conditions to perform melt-kneading include, for example, the method, and conditions which are the same as those of melt-kneading the reactive olefin resin (a1) and the carbodiimide group-containing compound (a2).

It is desirable that the auxiliary agent composition contain preferably 10 to 99 parts by weight, more preferably 30 to 95 parts by weight, and particularly preferably 50 to 90 parts by weight of the reactive olefin resin (a1), preferably 0.1 to 40 parts by weight, more preferably 0.5 to 25 parts by weight, and particularly preferably 1 to 15 parts by weight of the carbodiimide group-containing compound (a2), and preferably 1 to 90 parts by weight, more preferably 5 to 70 parts by weight, and particularly preferably 10 to 50 parts by weight of the unmodified polyolefin (B) (however, the total amount of the resin (a1) and the polyolefin (B) is assumed to be 100 parts by weight).

When the contents of respective components are in the above-described ranges, the auxiliary agent composition can be stably produced.

When the carbodiimide group content is too small or the unmodified polyolefin (B) content is too large, the reinforcing effect and dispersion effect of a filler by the auxiliary agent composition are not exhibited in some cases, or when the carbodiimide group content is too large or the unmodified polyolefin (B) content is too small, the molding processability is lowered in some cases and the effect of improving the reinforcing property and dispersibility of a filler by the auxiliary agent composition is not enhanced so much in some cases, which is not economical in some cases.

Known agents such as process stabilizers, thermal stabilizers, anti-thermal aging agents, and fillers, can also be added to the auxiliary agent composition in a range that does not impair the object of the present invention.

The auxiliary agent composition is preferably a composition having excellent fluidity at 190°C or 230°C.

The MFR of the auxiliary agent composition at 190°C or 230°C and at a load of 2.16 kg is usually 0.01 to 400 g/10 min., preferably 0.1 to 300 g/10 min., and still more preferably 1 to 200 g/10 min.

It is preferable that the MFR be in such a range because the auxiliary agent composition has better effect of improving the reinforcing property and dispersibility of a filler.

Molding Method

The method of molding the filler-reinforced resin composition or a dilution thereof is not particularly limited, and all the known methods can be used.

Specific examples thereof include injection molding, blow molding, press molding, calender molding, extrusion molding, and stamping molding, and particularly, injection molding and press molding are preferable.

By extrusion molding, for example, a sheet or film (unstretched), a pipe, a tube, or an electric wire can be molded. A stretched film can be produced by stretching an extruded sheet or extruded film (unstretched), for example, through a tenter method (longitudinal/lateral stretching, lateral/longitudinal stretching), a simultaneous biaxial stretching method, and a uniaxial stretching method.

A filament can be produced, for example, by extruding a molten filler-reinforced resin composition through a spinneret.

Examples

Hereinafter, the present invention will be further described giving Examples and Comparative Examples, but the present invention is not restricted by these Examples at all as long as deviation from the gist of the present invention does not occur.

(Measurement Methods)

In the present Examples and the like, measurement was conducted according to the following methods.

[Melt Flow Rate (MFR)]

The MFR was measured at 190°C or 230°C under a load of 2.16 in accordance with ASTM D1238.

[Number Average Molecular Weight (Mn)]

The number average molecular weight (Mn) was measured by GPC.

Specifically, a gel permeation chromatograph Alliance GPC-2000 manufactured by Waters Corporation was used.

As separation columns, two TSKgel GMH6-HT columns and two TSKgel GMH6-HTL columns were used, the column size was 7.5 mm in diameter and 300 mm in length for both types of columns, the column temperature was set to 140°C, o-dichlorobenzene (manufactured by Wako Pure Chemical Industries, Ltd.) containing 0.025% by weight of an antioxidant (butylhydroxytoluene, manufactured by Takeda Pharmaceutical Company Limited.) was used as a mobile phase and moved at 1.0 ml/min., the sample concentration was set to 15 mg/10 mL, the amount of the sample to be injected was set to 500 $\mu$L, and a differential refractometer was used as a detector.

Standard polystyrene manufactured by Tosoh Corporation was used when molecular weight was in a range of Mw < 1000 or Mw > 4 $\times$ 10$^6$ and standard polystyrene manufactured by Pressure Chemical Co. was used in the case of 1000 $\leq$ Mw $\leq$ 4 $\times$ 10$^6$.

In the case of the maleic anhydride-modified polypropylene, the Mn was calculated in terms of polypropylene.

[Tensile Fatigue]

A tensile fatigue test was conducted using an injection-molded test piece (dumbbell test piece) of 115 mm in length, 19 mm in width, and 3 mm in thickness and applying a tensile load repeatedly in an air atmosphere of 23°C or of 80°C under a condition of a frequency of 10 Hz. The test was conducted under a plurality of tensile loads, and the number of times of applying tension until the test piece was broken was recorded for each tensile load. It is to be noted that in the present Examples/Comparative Examples, the tensile load when a test piece was broken at a number of times of applying tension of 200000 was used as an index of the tensile fatigue property.

[Bending Creep]

A 3-point bending creep test was conducted using an injection-molded test piece of 127 mm in length, 12.7 mm in width, and 3 mm in thickness in an air atmosphere of 23°C or of 80°C. Specifically, the distance between supporting points was set to 48 mm, and the distortion of the test piece 1000 hours after applying a load of 32 kgf at the center of the supporting points was measured.

(Raw Materials Used)

- PP1: Polypropylene (random PP, trade name: F327, manufactured by Prime Polymer Co., Ltd., MFR (230°C): 7 g/10 min.)
- PP2: Polypropylene (homo PP, trade name: J106G, manufactured by Prime Polymer Co., Ltd., MFR (230°C): 15 g/10 min.)
- CF: PAN chopped fiber (trade name: HTA-C6-S, manufactured by Toho Tenax Co., Ltd., fiber length: 6 mm, fiber diameter: 6 $\mu$m)

[Example 1]

<Production of Polyolefin Resin Having Group Reactive with Carbodiimide Group>

A maleic anhydride-modified polypropylene (hereinafter, abbreviated as "MAH-PP1") was obtained by mixing 100 parts by weight of PP1, 1 part by weight of maleic anhydride (MAH, manufactured by Wako Pure Chemical Industries, Ltd.), and 0.25 parts by weight of 2,5-dimethyl-2,5-bis(tert-butylperoxy)hexyne-3 (trade name: PERHEXYNE25B, manufactured by NOF CORPORATION), and extruding the mixture using a twin-screw kneader (TEX-30, manufactured by The Japan Steel Works, LTD., L/D = 40, using vacuum vent) under conditions of a cylinder temperature of 220°C, a screw speed of 200 rpm, and a discharge amount of 80 g/min.
The obtained MAH-PP1 was dissolved in xylene, and subsequently the obtained xylene solution was poured into acetone to reprecipitate and purify the MAH-PP1, and the amount of maleic anhydride grafted was measured by IR and found to be 0.7% by weight.
The Mn of the MAH-PP1 was 28,000.
In addition, the value of $Mn/\{(100 - M) \times f/M\}$ was 2.0 for the MAH-PP1.

> [f: molecular weight of maleic anhydride; 98 (g/mol)
> M: content of structure derived from maleic anhydride in MAH-PP1; 0.7 (wt%)
> Mn: number average molecular weight of MAH-PP1; 28,000]

<Production of Carbodiimide-Modified Polyolefin>

A carbodiimide-modified polyolefin (hereinafter, abbreviated as "CDI-PP1") was obtained by mixing 100 parts by weight of the MAH-PP1 and 8.8 parts by weight of a carbodiimide group-containing compound (trade name: CARBODILITE HMV-8CA, manufactured by Nisshinbo Chemical Inc., carbodiimide group equivalent: 278, Mn: 2500), and extruding the obtained mixture using a twin-screw kneader (TEX-30, manufactured by The Japan Steel Works, LTD., L/D = 40, using vacuum vent) under conditions of a cylinder temperature of 250°C, a screw speed of 200 rpm, and a discharge amount of 80 g/min.
The MFR (230°C, load of 2.16 kg) of the obtained CDI-PP1 was 130 g/10 min.
It is to be noted that the reaction rate is 100% according to IR analysis because the peak of maleic acid disappeared, and the carbodiimide group content calculated from the amount charged is 27 mmol/100 g.

<Production of Filler-Reinforced Resin Composition>

A filler-reinforced resin composition was obtained by mixing the CDI-PP1 (1 part by weight), the PP2 (90 parts by weight), and the CF (10 parts by weight), and extruding the obtained mixture using a twin-screw kneader (KZW-15, manufactured by TECHNOVEL CORPORATION, L/D = 30) under conditions of a cylinder temperature of 230°C, a screw speed of 200 rpm, and a discharge amount of 30 g/min.
The formulation for producing the filler-reinforced resin composition is shown in Table 1.

<Production of Filler-Reinforced Resin Structure>

Structures were obtained by performing injection molding the filler-reinforced resin composition into the shapes of the test pieces for the respective tests using an injection molding machine (PS20E5ASE, manufactured by NISSEI PLASTIC INDUSTRIAL CO., LTD.) under conditions of a cylinder temperature of 230°C and a metal mold temperature of 40°C, and the tensile fatigue test and bending creep test for the obtained structures were conducted. The results are shown in Table 1.

[Comparative Example 1]

A composition and structures were produced in the same manner as in Example 1 except that the CDI-PP1 was not used, and the physical properties of the structures were measured. The results are shown in Table 1.

It is to be noted that when the bending creep test was conducted at 80°C, the structures were broken 1 hours after applying the load, and therefore the distortion immediately before the breakage is shown in Table 1.

[Comparative Example 2]

A composition and structures were produced in the same manner as in Example 1 except that the MAH-PP1 was used in place of the CDI-PP1, and the physical properties of the structures were measured. The results are shown in Table 1.

It is to be noted that when the bending creep test was conducted at 80°C, the structures were broken 20 hours after applying the load, and therefore the distortion immediately before the breakage is shown in Table 1.

[Comparative Example 3]

A maleic anhydride-modified polypropylene (hereinafter, abbreviated as "MAH-PP2") was obtained in the same manner as in Example 1 except that the amount of MAH used was changed to 0.05 parts by weight, the amount of PERHEXYNE25B used was changed to 0.02 parts by weight, and the cylinder temperature was changed to 260°C in the production of the MAH-PP1.

The amount of maleic anhydride grafted in the obtained MAH-PP2 was measured by IR and found to be 0.03% by weight.

The Mn of the MAH-PP2 was 29,000.

In addition, the value of $Mn/\{(100 - M) \times f/M\}$ was 0.09 for the MAH-PP2.

(f: molecular weight of maleic anhydride; 98 (g/mol)
M: content of structure derived from maleic anhydride in MAH-PP2; 0.03 (wt%)
Mn: number average molecular weight of MAH-PP2; 29,000)

A carbodiimide-modified polyolefin (hereinafter, abbreviated as "CDI-PP2") was obtained in the same manner as in Example 1 except that the MAH-PP2 was used in place of the MAH-PP1, and the amount of the carbodiimide group-containing compound used was changed to 0.25 parts by weight.

The carbodiimide group content of the obtained CDI-PP2 was calculated from the amount charged and found to be 0.09 mmol/100 g.

A composition and structures were produced in the same manner as in Example 1 except that the CDI-PP2 was used in place of the CDI-PP1, and the physical properties of the structures were measured. The results are shown in Table 1.

[Comparative Example 4]

A maleic anhydride-modified polypropylene (hereinafter, abbreviated as "MAH-PP3") was obtained by mixing 100 parts by weight of the PP2, 30 parts by weight of MAH, and 5 parts by weight of dicumyl peroxide (trade name: PERCUMYL D, manufactured by NOF CORPORATION), and performing reaction in a toluene solution for 5 hours.

The amount of maleic anhydride grafted in the obtained MAH-PP3 was measured by IR and found to be 5.0% by weight.

The Mn of the MAH-PP3 was 18,000.

In addition, the value of $Mn/\{(100 - M) \times f/M\}$ was 10 for the MAH-PP3.

(f: molecular weight of maleic anhydride; 98 (g/mol)
M: content of structure derived from maleic anhydride in MAH-PP3; 5.0 (wt%)
Mn: number average molecular weight of MAH-PP3; 18,000)

A carbodiimide-modified polyolefin (hereinafter, abbreviated as "CDI-PP3") was obtained in the same manner as in Example 1 except that the MAH-PP3 was used in place of the MAH-PP1, and the amount of the carbodiimide group-containing compound used was changed to 150 parts by weight.

It is to be noted that the appearance of the extruded resin was somewhat gelled.

The carbodiimide group content of the obtained CDI-PP3 was calculated from the amount charged and found to be 220 mmol/100 g.

A composition and structures were produced in the same manner as in Example 1 except that the CDI-PP3 was used in place of the CDI-PP1, and the physical properties of the structures were measured. The results are shown in Table 1.

[Table 1]

| | Constituent | Compound name (trade name) | Example 1 | Comparative Example 1 | Comparative Example 2 | Comparative Example 3 | Comparative Example 4 |
|---|---|---|---|---|---|---|---|
| Formulation | CDI-PP1 | Carbodiimide group-containing PP | 1 | | | | |
| | CDI-PP2 | Carbodiimide group-containing PP | | | | 1 | |
| | CDI-PP3 | Carbodiimide group-containing PP | | | | | 1 |
| | MAH-PP1 | Maleic anhydride group-containing PP | | | 1 | | |
| | PP2 | Homo PP (J106G) | 90 | 90 | 90 | 90 | 90 |
| | CF | Carbon fiber (HTA-C6-S) | 10 | 10 | 10 | 10 | 10 |
| Physical Properties | Item | Unit | | | | | |
| | Tensile fatigue (tensile strength at which breakage occurs at 200000th tension) | 23°C | MPa | 54 | 36 | 45 | 42 | 45 |
| | | 80°C | MPa | 31 | 15 | 17 | 16 | 17 |
| | Bending creep (distortion after 1000 hours) | 23°C | % | 0.9 | 1.3 | 1.1 | 1.2 | 1.1 |
| | | 80°C | % | 3.6 | 8.6 (*1) | 8.1 (*2) | - | - |

(*1): Distortion after 1 hour (*2): Distortion after 20 hours

From the results in Table 1, it is found that both of the tensile fatigue and the bending creep were improved more in Example 1 where the CDI-PP1 was used than in Comparative Example 1.

Further, it is found that both of the tensile fatigue and the bending creep were improved more in Example 1 where the CDI-PP1 was used than in Comparative Example 2 where the MAH-PP1 was used. It is considered that this is because the CDI-PP1 reacts with a surface functional group of the carbon fiber to form a strong bond between the carbon fiber and polypropylene.

With respect to the CDI-PP2, the value of $Mn/\{(100 - M) \times f/M\}$ of the MAH-PP2, which is a raw material for the CDI-PP2, was low, as low as 0.09, and the CDI-PP2, which was produced according to the content of MAH grafted, had a low carbodiimide group content, as low as 0.09 mmol/100 g. It is found that neither the tensile fatigue nor the bending creep was improved in any of the structures using the CDI-PP2.

With respect to the CDI-PP3, the value of $Mn/\{(100 - M) \times f/M\}$ of the MAH-PP3, which is a raw material for the CDI-PP3, was high, as high as 10, and the CDI-PP3 was produced adjusting the amount of the carbodiimide group-containing compound in order to suppress gelation as much as possible, but it was difficult to produce the CDI-PP3 because gelation was somewhat accompanied and from other reasons.

It is found that neither the tensile fatigue nor the bending creep was improved in any of the structures using the CDI-PP3 thus obtained.

Industrial Applicability

According to one embodiment of the present invention, the reinforcing property and dispersibility of a filler in a filler-reinforced resin structure can be improved, and a structure having excellent tensile fatigue and bending creep can be obtained.

The present structure can be suitably used in the uses in which durability, such as tensile fatigue and bending creep, is required, for example, as automobile parts, motorcycle/bicycle parts, housing-related parts, medical devices, robot parts, aircraft parts, home electric appliance parts, electric/electronic parts, machine mechanism parts, power tool parts, food containers, sporting goods, and building material-related parts.

## Claims

1. A filler-reinforced resin structure comprising a carbodiimide-modified polyolefin (A) having a carbodiimide group content of 1 to 200 mmol/100 g.

2. The structure according to claim 1, wherein the carbodiimide-modified polyolefin (A) is a reaction product of a polyolefin resin (a1) having a group reactive with a carbodiimide group and a carbodiimide group-containing compound (a2).

3. The structure according to claim 2, wherein the polyolefin resin (a1) is a reaction product of a compound (x) having a group reactive with a carbodiimide group and an olefin or polyolefin and is a resin satisfying expression (1) :

$$0.1 < Mn/\{(100 - M) \times f/M\} < 6 \quad \cdots \quad (1)$$

wherein

f: a molecular weight (g/mol) of the compound (x) having a group reactive with a carbodiimide group;
M: a content (wt%) of a structure derived from the compound (x) having a group reactive with a carbodiimide group in the polyolefin resin (a1); and
Mn: a number average molecular weight of the polyolefin resin (a1).

4. The structure according to claim 2 or 3, wherein the polyolefin resin (a1) is a polyolefin resin having a maleic acid group or a maleic anhydride group.

5. The structure according to any one of claims 1 to 4, comprising:

0.01 to 50 parts by weight of the carbodiimide-modified polyolefin (A);
20 to 99 parts by weight of an unmodified polyolefin (B); and

1 to 80 parts by weight of a filler (C), based on 100 parts by weight of a total amount of the unmodified polyolefin (B) and the filler (C).

6. The structure according to claim 5, wherein the unmodified polyolefin (B) is a polypropylene resin.

7. The structure according to claim 5 or 6, wherein the filler (C) is a carbon fiber.

8. A filler-reinforced resin structure comprising:

a carbodiimide-modified polyolefin (A) having a carbodiimide group content of 1 to 200 mmol/100 g;
a polypropylene resin; and
a carbon fiber, and
the structure comprising 0.0001 to 140 mmol of the carbodiimide group based on 100 g of resin components in the structure.

9. The structure according to any one of claims 1 to 8, being a front end module of an automobile.

10. The structure according to any one of claims 1 to 8, being an air cleaner part of an automobile.

11. The structure according to any one of claims 1 to 8, being a door part of an automobile.

12. The structure according to any one of claims 1 to 8, being a medical device.

13. The structure according to any one of claims 1 to 8, being a fork and/or a frame for a robot.

## INTERNATIONAL SEARCH REPORT

| | International application No. |
|---|---|
| | PCT/JP2018/008948 |

| A. CLASSIFICATION OF SUBJECT MATTER |
|---|
| Int.Cl. C08L23/36(2006.01)i, C08F8/30(2006.01)i, C08K7/06(2006.01)i, C08L23/02(2006.01)i |

According to International Patent Classification (IPC) or to both national classification and IPC

| B. FIELDS SEARCHED |
|---|
| Minimum documentation searched (classification system followed by classification symbols) |
| Int.Cl. C08L23/00-23/36, C08F8/30, C08K3/00-13/08 |

| Documentation searched other than minimum documentation to the extent that such documents are included in the fields searched |
|---|
| Published examined utility model applications of Japan   1922-1996 |
| Published unexamined utility model applications of Japan   1971-2018 |
| Registered utility model specifications of Japan   1996-2018 |
| Published registered utility model applications of Japan   1994-2018 |

| Electronic data base consulted during the international search (name of data base and, where practicable, search terms used) |
|---|
| |

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | WO 2009/069649 A1 (MITSUI CHEMICALS, INC.) 04 June 2009, claims, paragraphs [0017]-[0054], [0096]-[0118], examples<br>& US 2010/0311892 A1, claims, paragraphs [0017]-[0061], [0109]-[0134], examples & EP 2221339 A1 & KR 10-2010-0089888 A & CN 101878266 A | 1-8, 11<br>9-10, 12-13 |

☒  Further documents are listed in the continuation of Box C.    ☐  See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 28.05.2018 | 05.06.2018 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

| International application No. |
| --- |
| PCT/JP2018/008948 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | WO 2013/108811 A1 (TORAY INDUSTRIES) 25 July 2013, claims, paragraphs [0029]-[0070], [0085]-[0088], [0109], [0110], [0178]-[0180], examples<br>& US 2014/0356612 A1, claims, paragraphs [0085]-[0135], [0152]-[0156], [0178], [0179], [0253]-[0255], examples & EP 2805995 A1 & CN 104066783 A & KR 10-2014-0114342 A | 1-8, 11<br>9-10, 12-13 |
| X<br>Y | JP 2008-88360 A (TOYOTA MOTOR CORPORATION; MITSUI CHEMICALS, INC.) 17 April 2008, claims, paragraphs [0050]-[0083], [0098], examples<br>(Family: none) | 1-8, 11<br>9-10 |
| Y | JP 2011-16909 A (MITSUI CHEMICALS, INC.; PRIME POLYMER CO., LTD.) 27 January 2011, claims, paragraph [0115]<br>(Family: none) | 9-10, 12-13 |
| A | JP 2005-213478 A (IDEMITSU KOSAN CO) 11 August 2005, claims, examples<br>& WO 2005/073306 A1 | 1-13 |
| A | WO 2005/097840 A1 (MITSUI CHEMICALS, INC.) 20 October 2005, claims, examples<br>& US 2007/0173603 A1, claims, examples & EP 1728803 A1 & KR 10-2007-0008608 A & CN 1938339 A | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003277525 A
- JP 2005213479 A
- WO 2005097840 A
- WO 2009069649 A
- JP 2005213478 A